(19) Europäisches Patentamt

European Patent Office

Office européen des brevets

(11) **EP 4 043 404 A1**

(12) **EUROPEAN PATENT APPLICATION**

(43) Date of publication:
**17.08.2022 Bulletin 2022/33**

(51) International Patent Classification (IPC):
***C01G 53/00*** (2006.01)

(21) Application number: **21382113.5**

(52) Cooperative Patent Classification (CPC):
**C01G 53/006;** C01P 2002/72; C01P 2002/85;
C01P 2004/04; C01P 2006/42

(22) Date of filing: **12.02.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Universitat de Valéncia
46010 Valencia (ES)**

(72) Inventors:
• **ABELLÁN SÁEZ, Gonzalo
46980 PATERNA (ES)**
• **OESTREICHER, Víctor
46980 PATERNA (ES)**
• **CORONADO MIRALLES, Eugenio
46980 PATERNA (ES)**
• **ROMERO PASCUAL, Jorge
46980 PATERNA (ES)**

(74) Representative: **Ponti & Partners, S.L.P
C. de Consell de Cent 322
08007 Barcelona (ES)**

(54) **A LAYERED DOUBLE HYDROXIDE, A PROCESS FOR THE SYNTHESIS AND USES THEREOF**

(57) The present invention relates to a layered double hydroxide comprising at least one divalent cation $A^{II}$ or alternatively $Li^I$, at least one trivalent cation $B^{III}$ selected from the group consisting of $V^{III}$, $Co^{III}$, $Cr^{III}$, $Mn^{III}$, $Fe^{III}$, $Ga^{III}$ and lanthanides. The present invention also relates to a process for the synthesis of said layered double hydroxide and uses thereof.

Figure 1

## Description

### FIELD OF THE INVENTION

The present invention relates to the field of layered double hydroxides (also referred herein as LDHs). In particular, the present invention relates to novel layered double hydroxides, a process for the synthesis and uses thereof.

### BACKGROUND OF THE INVENTION

The constantly increasing consumption of energy and its indiscriminate use, mainly supplied by fossil fuel, have provoked both energy and environmental crisis, becoming a highly priority target for the modern society. In the search of clean and renewable energy system, electrochemical water splitting appears as one of the most promising technologies for the transformation of sustainable energy sources (sun, wind, to name few) into clean chemical energy, *i.e.* hydrogen.

The half reaction of the water splitting, the oxygen evolution reaction (OER), remains as the bottleneck of the whole process, suffering sluggish kinetic and requiring high overpotential. Currently, precious metal oxides such as $RuO_2$ and $IrO_2$ are utilized as the state-of-the-art electrocatalyst for OER in alkaline media. However, their instability at higher anodic potentials, and particularly, their high cost and low abundance hinders large-scale commercial applications. Thus, the development of highly active and efficient catalysts based on low cost earth-abundant elements, non-contaminant and non-geolocated is a matter of utmost importance.

Layered double hydroxides (LDHs), due to their flexible chemical tunability can easily satisfy the previous requirements. This type of compounds can be defined as lamellar inorganic solids with a hydrotalcite structure similar to brucite, where the partial substitution of trivalent for divalent cations results in a positive sheet charge, compensated by anions situated in the interlayer galleries (see https://www.sciencedirect.com/topics/materials-science/layered-double-hydroxides). Since the first report on NiFe LDHs exhibiting high OER activity, a tremendous effort was focused on the optimization of the OER performance. Nowadays, Fe-based LDHs catalyst own the best performance for OER in alkaline conditions reported so far, outperforming those based on noble metals and amorphous Fe-based oxyhydroxides. Many different synthetic approaches have been explored to improve their electrochemical performance, including: single layer exfoliation, the obtaining of sub-nanometric sheets, the increment in the basal space through anion exchange, defect engineering to increase the active sites, or the enhancement of the conductivity by heteroatom doping. However, despite their fascinating performance, practical application of LDHs in water splitting is restricted by the low-efficiency of the available synthetic protocols, which are still too complicated for wide application. As a matter of fact, even the simplest case of NiFe LDHs containing carbonate anions remains commercially unavailable, alerting about the bottleneck in the implementation of Fe-based LDHs at large-scale.

Surely this fact is related to the hydrolytic chemistry of $Fe^{III}$, a highly acidic cation ( $pK_a^{Fe^{III}} = 2.2$), exhibiting low solubility $\left(pK_{sp}^{Fe(OH)_3} = 38.6\right)$ and very low water exchange reaction rate $\left(k_{H_2O}^{Fe^{III}} = 1.6\ 10^2\ s^{-1}\right)$, compared to other divalent cations. In addition to these features, $Fe^{III}$ is a non-amphoteric cation, as in the case of $Al^{III}$, hindering the redissolution and reprecipitation steps taking place during the recrystallization processes. For that reason, synthesis of Fe-based LDH requires i) high recrystallization temperatures carried out under specific autogenous conditions, ii) the use of chelating agents to avoid Fe-based spinel impurities formation, and iii) the use of topochemical approaches employing Fe", a less acidic ( $pK_a^{Fe^{II}} = 6.8$), more soluble cation $\left(pK_{sp}^{Fe(OH)_2} = 16.3\right)$ exhibiting higher exchange reaction rate ( $k_{H_2O}^{Fe^{II}} = 4.4\ 10^6\ s^{-1}$). These protocols, or the combination of some of them, guarantee obtaining crystalline and pure Fe-based LDHs, despite they cannot be scalable.

Hence, the inventors have developed a process which takes advantage of this situation by working with mild conditions, making the homogeneous alkalinization at room temperature, avoiding the recrystallization process and the subsequent formation of insoluble iron-based impurities. For achieving this, the process of the invention employs the well-known nucleophilic attack of chloride over an epoxide ring leading to the progressive delivery of OH- anions, also known as the *epoxide route* (see Oestreicher, V.; Jobbágy, M. One Pot Synthesis of Mg2Al(OH)6Cl·1.5H2O Layered Double Hydroxides: The Epoxide Route. Langmuir 2013, 29 (39), 12104-12109. https://doi.org/10.1021/la402260m). This method has proven to be very efficient in the synthesis of mesoporous materials, layered hydroxides (see Oestreicher, V.; Jobbágy, M. On Demand One-Pot Mild Preparation of Layered Double Hydroxides and Their Hybrid Forms: Advances through the Epoxide Route. Chem. - Eur. J. 2019, 25 (54), 12611-12619. https://doi.org/10.1002/chem.201902627) or metal organic frameworks at room temperature in a one-pot procedure, however it has never been used in the synthesis of NiFe-LDHs, nor its hybrid derivatives or in ternary LDHs. Previous reports on LDHs take advantage of the amphoteric character of aluminium, however, in Fe-based LDHs this represents a major drawback. Therefore, to overcome this limitation it is mandatory to have an extremely precise control over: i) the initial pH (which will determine the solubility of the cations, a matter of utmost importance when using transition metal cations beyond aluminium), and, ii) the alkalinisation process (*i.e.* the pH as function of time), which is governed by the concentration of the nucleophile and the epoxide. The consequence of hindering the recrystallization of the LDHs results in non-homogeneous cation distributions thorough the layers, leading to a new class of highly clusterized and disordered LDHs that behaves as very efficient water oxidation electrocatalysts. This method can be easily transferred to industry because does not require the in-situ control of the pH, and can be easily scaled up without special requirements (neither in shape and size) for the reactors.

The present invention represents a straightforward, low-cost and low time- demanding strategy for the synthesis of new binary and ternary LDHs, either in the form of purely inorganic or hybrid phases. This new synthesis process is a one-pot process performed at atmospheric pressure with no sophisticated equipment which has the further advantage that it can be performed under mild conditions such as room temperature and aqueous-based solvents.

## SUMMARY OF THE INVENTION

In a first aspect, the present invention relates to a layered double hydroxide as defined in the set of claims.
In a second aspect, the present invention relates to a process for the synthesis of a layered double hydroxide according to the first aspect.
In a third aspect, the present invention relates to the different uses of the layered double hydroxide according to the first aspect.

## BRIEF DESCRIPTION OF THE DRAWINGS

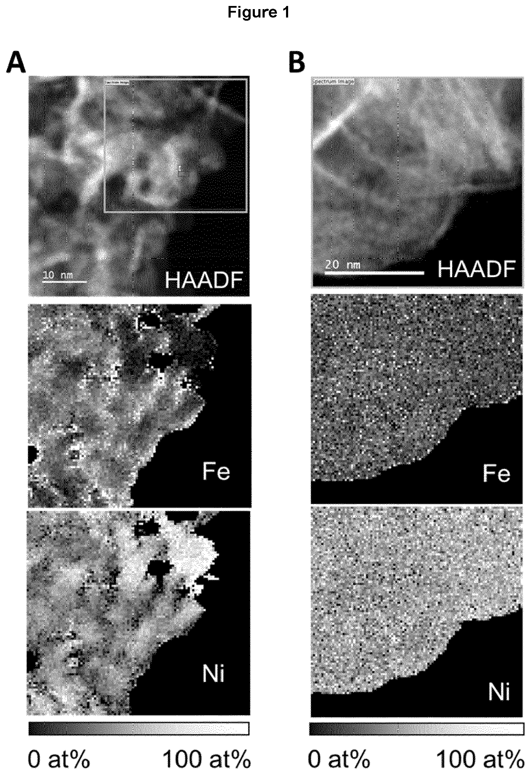

Figure 1. STEM-EELS characterization. Figure 1A shows the high-angle annular dark field (HAADF) image of the NiFe sample synthesized according to the present invention at room temperature. Compositional EELS mapping showing the Fe and Ni maps obtained from EEL spectrum quantification in atomic percentage. Figure 1B shows the HAADF image of the NiFe LDHs as obtained according to the prior art (G Abellán, E Coronado, C Martí-Gastaldo, A Ribera, JF Sanchez-Royo, Chemical Science, 2012, 3 (5), 1481-1485, https://doi.org/10.1039/C2SC01064J). Compositional EELS mapping showing the Fe and Ni maps obtained from EEL spectrum quantification in atomic percentage.

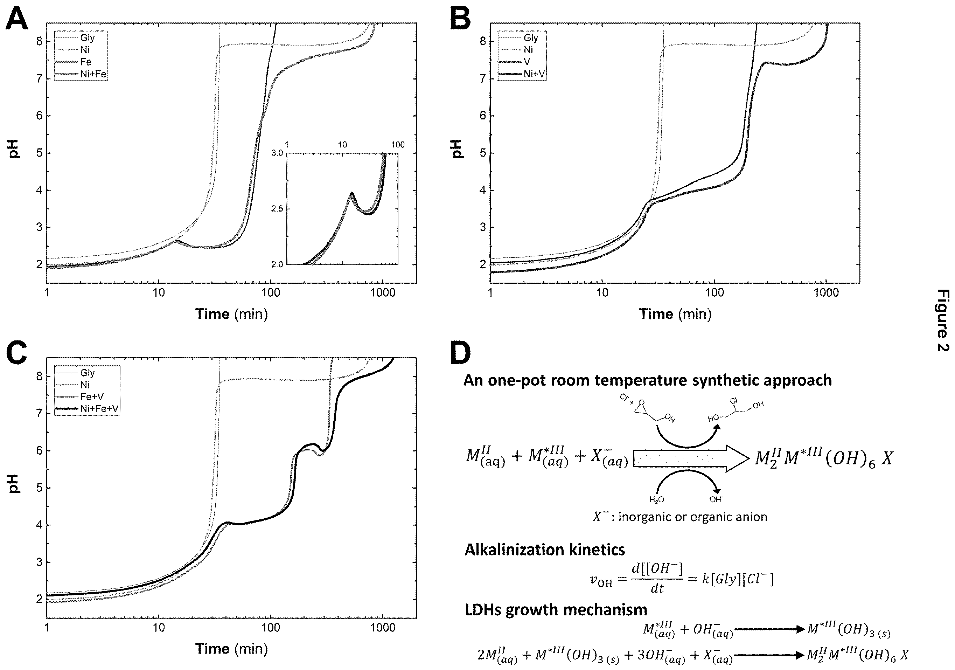

Figure 2. Figure 2A shows the pH profile for the precipitation of $NiCl_2$, $FeCl_3$, $NiCl_2$ + $FeCl_3$, and a control experiment containing NaCl and Gly, exclusively. Figure 2B represents the same as the figure 2A, but with $V^{III}$ instead of $Fe^{III}$. Figure 2C shows the pH profile of a 1:1 ratio mixture of $FeCl_3$:$VCl_3$ in addition to control, Ni and Fe-V systems. Figure 2D shows an example of the one-pot room temperature synthetic approach according to the present invention. The alkalinization kinetics and the LDHs growth mechanism are also shown.

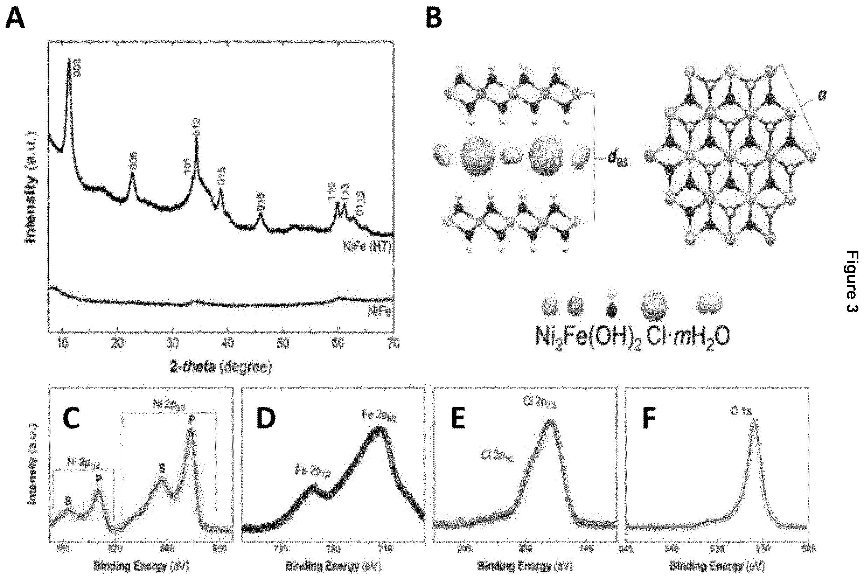

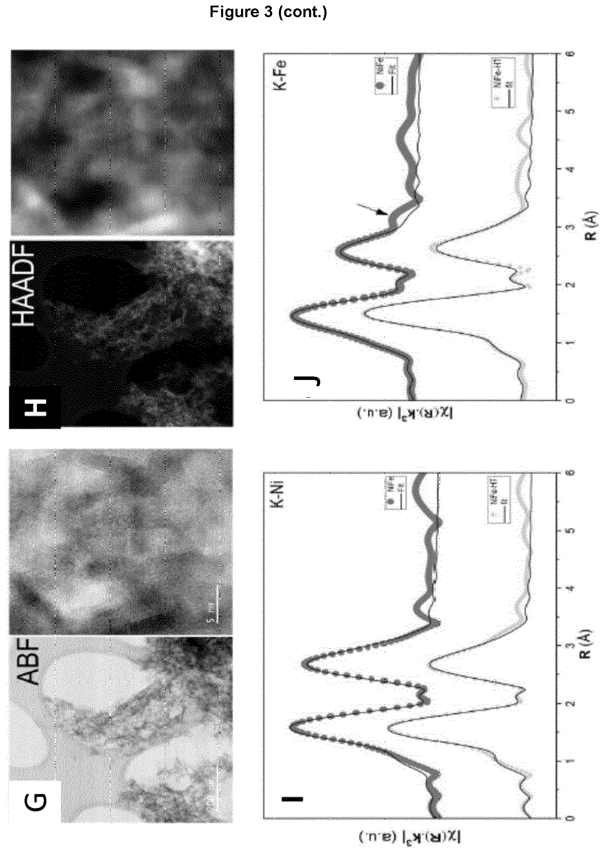

Figure 3. Figure 3A shows the powder X-ray diffraction (PXRD) for NiFe LDH synthesized at room temperature compared to a conventional one prepared using a hydrothermal approach (NiFe-HT). Figure 3B shows the 3D chemical structure for $Ni_2Fe(OH)_6Cl·mH_2O$. Figures 3C-F shows the representation of NiFe LDH sample submitted to X-ray photoelectron spectroscopy (XPS). Figure 3G-H show simultaneously acquired high-angle annular dark field (HAADF) and annular bright field (ABF) images at low magnification (scale bar: 200 nm) and, high magnification (scale bar: 5 nm). Figure 3I-J shows the Fourier transforms (FT) of the EXAFS (extended region from the absorption spectra) oscillations for the samples of NiFe and NiFe-HT.

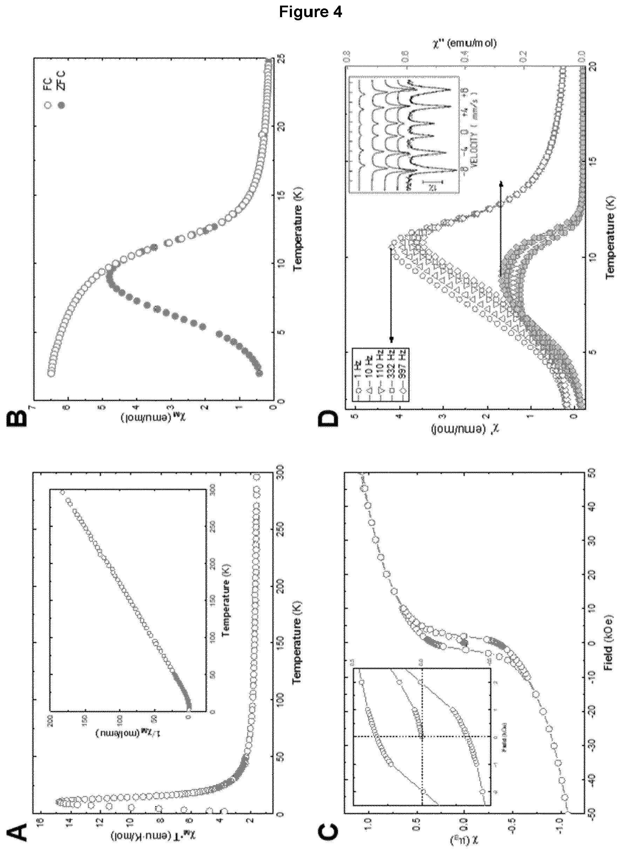

Figure 4. Magnetic characterization of the NiFe LDH obtained according to the present invention containing chloride as interlayer anion synthesized at room temperature. (A) $X_M$ vs. T plot - the inset represents the inverse susceptibility as a function of temperature -. (B) Field cooled and zero field cooled (FC/ZFC) plot. (C) Hysteresis loops at 2 K. (D) Thermal dependence of the $X_M'$ (in phase) and $X_M''$ (out-of-phase) signals at 1, 10, 110, 332 and 997 Hz. Inset: Mössbauer spectra of the NiFe-LDHs recorded at 4 K. The lines superimposed on the experimental points represent the sum of sextets corresponding to $Fe^{III}$ atoms with different number of nearest neighbouring $Ni^{II}$. The sextets are shown slightly shifted for clarity.

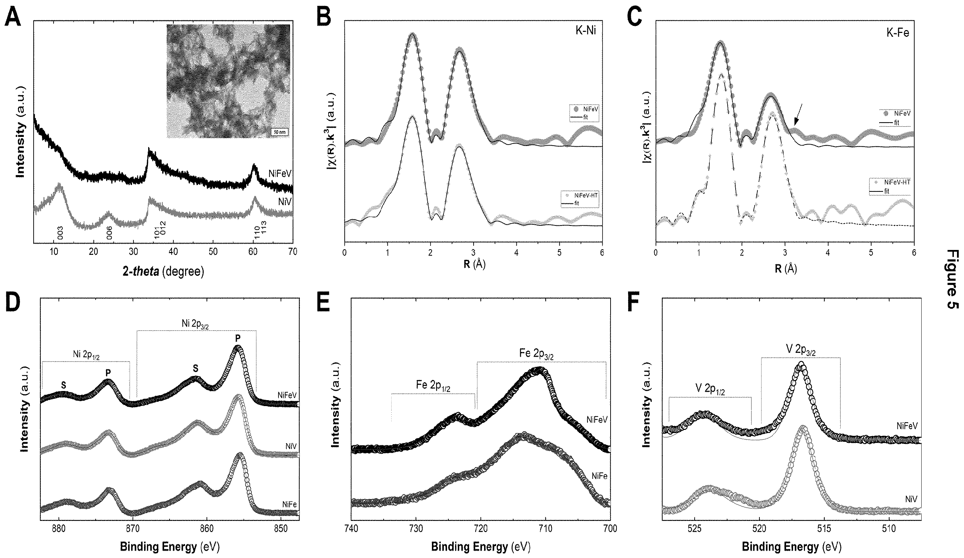

Figure 5. Figure 5A shows PXRD patterns obtained for the samples NiV and NiFeV containing chloride synthesized according to the present invention. In the case of NiFeV sample, EXAFS recorded at Ni-K edge (Figure 5B) and Fe-K edge (Figure 5C) confirms the presence of Ni and Fe in oxidation state 2+ and 3+, respectively. Figures 5D-F shows XPS characterization for NiV and NiFeV samples obtained according to the present invention corroborating the presence of Ni, Fe and V in oxidation states 2+, 3+ and 4+, respectively.

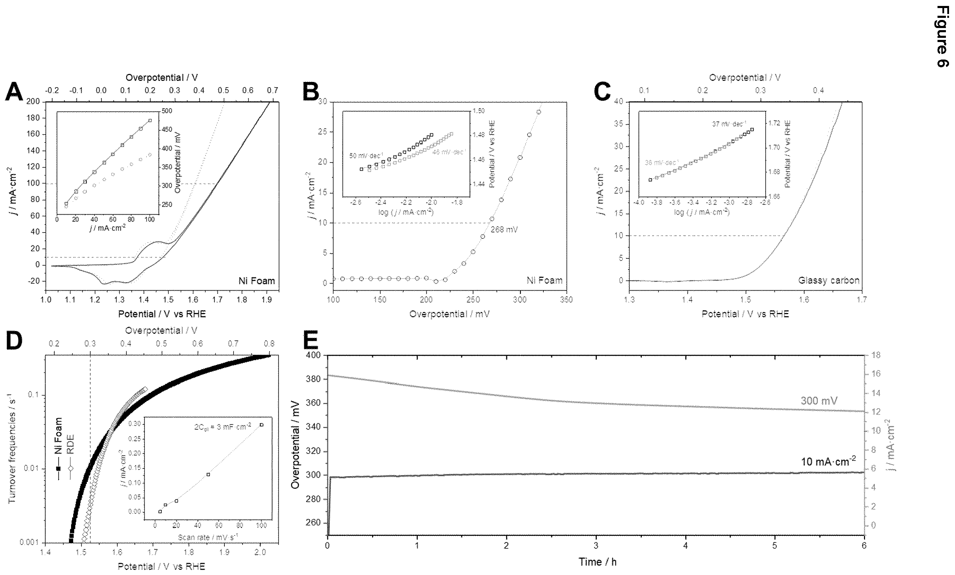

Figure 6. Performance of NiFe LDH samples obtained according to the present invention as OER catalysts in 1 M KOH electrolyte. (A) OER polarization curves from the cycling voltammetry using grown NiFe LDHs on Ni foam collectors. Dashed lines indicate 10 and 100 mA·cm$^{-2}$ current densities. The inset shows the overpotential values measured at different current densities. Light grey lines/dots represent the corresponding *iR*-corrected plots. (B) Linear voltammetry prepared using 30 min chronoamperometries measured at different overpotentials using 10 mV steps. The inset shows the Tafel slopes calculated from the CVs shown in Figure 6A. (C) OER polarization curves from the CVs using glassy carbon rotating disk electrode (GC-RDE) as collector. The inset shows the Tafel slopes calculated from the GC-RDE. Light grey lines/dots represent the corresponding *iR*-corrected plots. (D) Turnover frequency trends as a function of potential using Ni foam and glassy carbon as collectors. The inset shows the electrochemical surface area (ECSA) of the NiFe LDH calculated from CVs performed in a nonfaradaic region at different scan rates. (E) Potentiostatic and galvanostatic stability tests under 300 mV and 10 mA·cm$^{-2}$, respectively during 6 h.

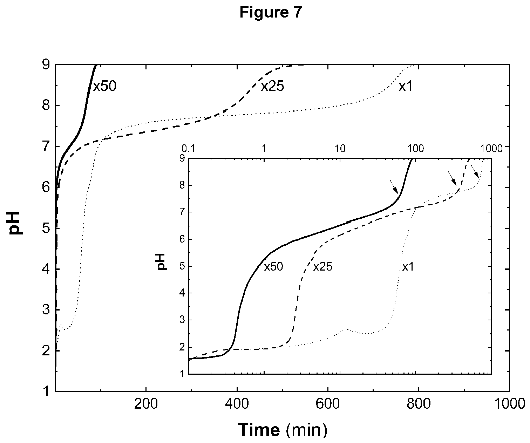

Figure 7. pH profiles for experiments NiFe LDH x1, x25 and x50 synthetized through the process of the invention. Inset: pH profiles with time in logarithm scale. Arrows depict the finalization of the precipitation.

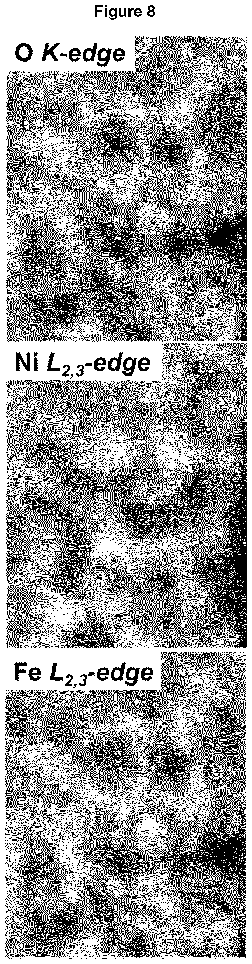

Figure 8. STEM-EELS characterization recorded over the sample NiFe LDH x50. EELS maps (by multiple linear least square, MLLS) for O (upper panel), Ni (middle panel) and Fe (lower panel) denote intense nano-segregation of Ni/Fe species. Note that due to the conversion of the figure into a grayscale the text shown over each photography became not clear and due to this reason this text has been redefined at the top of each figure.

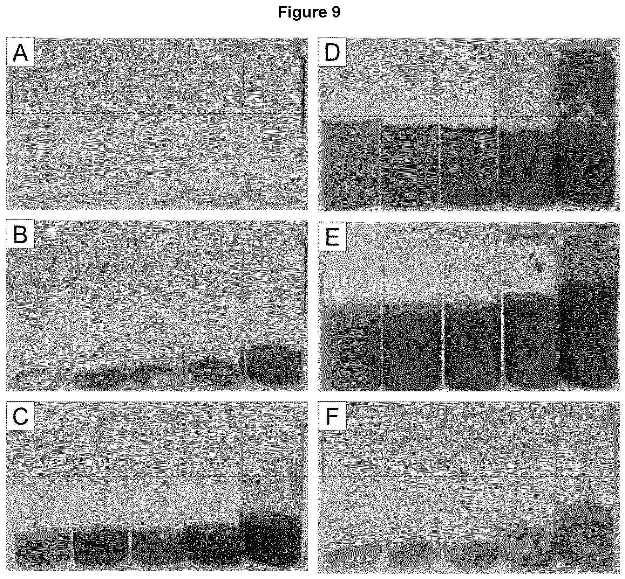

Figure 9. Photographs of the synthetic steps of NiFe-Seb LDH through the procedure of the invention, from 1x to 50x (left to right). H$_2$Seb (A), NiCl$_2$+FeCl$_3$+NaCl (B), aqueous solution of the inorganic salts (C), EtOH:H$_2$O mixture of H$_2$Seb+NiCl$_2$+FeCl$_3$+NaCl (D), reaction mixture after aging 24h at room temperature (E), NiFe-Seb LDH solid obtained for each condition after washing and drying (F). Dash line represents 25 mL in all the cases.

## DETAILED DESCRIPTION OF THE INVENTION

In a first aspect, the present invention relates to a layered double hydroxide comprising or consisting of at least one divalent cation A$^{II}$ or alternatively Li$^{I}$, at least one trivalent cation B$^{III}$ selected from the group consisting of V$^{III}$, Co$^{III}$, Cr$^{III}$, Mn$^{III}$, Fe$^{III}$, Ga$^{III}$ and lanthanides, wherein said layered double hydroxide has the general formula:

$$A_{1-y}^{II} B_y^{III} (OH)_2 X \cdot nH_2O$$

or in case of using Li$^{I}$ instead of the at least one divalent cation A$^{II}$, the formula is:

$$LiB_2^{III}(OH)_6 X \cdot nH_2O$$

wherein X is an anion, y is higher than 0 but lower than 1, and n is the number of water molecules, typically between 0 and 3, and
wherein said layered double hydroxide has a non-homogeneous distribution of the cations across thereof as shown by STEM-EELS (scanning transmission electron microscopy (STEM) combined with electron energy-loss spectroscopy (EELS)) and by the presence of a single peak in the range from 3 to 4 Å measured through extended X-ray absorption fine structure spectroscopy (EXAFS). In the LDHs disclosed in the prior art, the absence of this third peak represents a homogeneous distribution of the material, as this it is related to the presence of seconds neighbouring B$^{III}$-O and B$^{III}$-OH-B$^{III}$ pairs, leading to a pronounced B$^{III}$ clustering.

In the present description and in the claims, the terms "comprises", "comprising", "containing" and "having" are open terms and mean "includes", "including" and the like; while terms such as "consists of" or "consisting of" refer only to the elements mentioned after these terms and others which are not mentioned are excluded.
Unless otherwise explained, all technical and scientific terms used herein have the same meaning as commonly understood by one of ordinary skill in the art to which this disclosure belongs. The singular terms "a", "an", "one" and "the" include plural referents unless context clearly indicates otherwise. Similarly, the word "or" is intended to include "and" unless the context clearly indicate otherwise.

X in the formula is preferably an organic anion or an inorganic anion. In a preferred embodiment, said X is an inorganic anion. In another embodiment, said anion is a macromolecule having negative charge. In another embodiment, the anion in the formula is not a nucleophile, for example, sebacic acid.

In case of Fe-containing LDHs, the following is also shown:
Mössbauer spectroscopy measurements collected in transmission mode at low temperatures (4K) shows that the analysis of the quadrupole splittings and the corresponding magnetic hyperfine fields yields a higher proportion (>60%) of Fe-OH-Fe pairs compared to conventional NiFe LDHs (G. Abellán et al. Inorg. Chem. 2013, 52, 10147-10157, https://doi.org/10.1021/ic401576q).

Furthermore, in case of magnetic LDHs the following is also shown:
Dynamic AC magnetic susceptibility measurements at low temperatures (2-50K) and with frequencies oscillating between 1-10000 Hz exhibit in both the in-phase and out-of-phase signals a clear frequency dependence that can be determined by Mydosh parameters higher than 0.03. This spin-glass like behaviour is a direct consequence of the cation clustering.

Said "non-homogeneous distribution of the cations across thereof" is also shown by the clustering of $B^{III}$ (phase segregation) observed by employing STEM-EELS (scanning transmission electron microscopy (STEM) combined with electron energy-loss spectroscopy (EELS)) technique. Figure 1B shows the phases for Ni-, Fe-based LDHs as obtained according to the prior art (G Abellán, E Coronado, C Martí-Gastaldo, A Ribera, JF Sanchez-Royo, Chemical Science, 2012, 3 (5), 1481-1485, https://doi.org/10.1039/C2SC01064J) and Figure 1A shows the NiFe sample synthesized according to the present invention at room temperature exhibiting a pronounced clustering (left column). Figure 1 shows the high-angle annular dark field (HAADF) images for both samples (upper panels), where in the case of the NiFe samples obtained through the process of the invention (left panel) a smaller and more defective material is observed. Compositional EELS mapping (by multiple linear least square, MLLS) showing the Fe (middle panels) and Ni (lower panel) maps obtained from EEL spectrum quantification in atomic percentage. In the case of the sample obtained through the process of the invention (left panels) a non-homogeneous distribution (clustering) of the aforementioned cations along all the material is observed in surface (bigger than 15x15 nm$^2$). Unlike this distinctive feature of the sample obtained at room temperature, a NiFe LDH synthetized according to the prior art (J Romero, M Varela, M Assebban, V Oestreicher, A Guedeja-Marrón, J L Jordá, G Abellán, E Coronado, Chemical Science, 2020, 11 (29), 7626-7633, https://doi.org/10.1039/D0SC00697A) depicts an homogeneous distribution of the cations at large scale (bigger than 20x20 nm$^2$).

In a preferred embodiment, the divalent cation $A^{II}$ is selected from the group consisting of $Mg^{II}$, $Ca^{II}$, $Fe^{II}$, $Co^{II}$, $Ni^{II}$, $Cu^{II}$, $Zn^{II}$ and $Cd^{II}$.

In another preferred embodiment, the layered double hydroxide further comprises a tetravalent metallic cation, preferably $Ti^{IV}$. The resulting formula using titanium as an example is:

$$A^{II}_{1-y} Ti^{IV}_y (OH)_2 X \cdot nH_2O$$

In a further embodiment, said at least one divalent cation $A^{II}$ is one divalent cation $A^{II}$. In yet another embodiment said at least one divalent cation $A^{II}$ is two divalent cations $A^{II}$. In yet another embodiment said at least one divalent cation $A^{II}$ is three divalent cations $A^{II}$.

In a further embodiment, said at least one trivalent cation $B^{III}$ is one trivalent cation $B^{III}$. In yet another embodiment said at least one trivalent cation $B^{III}$ is two trivalent cations $B^{III}$. In yet another embodiment said at least one trivalent cation $B^{III}$ is three trivalent cations $B^{III}$.

In a further embodiment, one divalent cation $A^{II}$ or two divalent cations $A^{II}$ or three divalent cations $A^{II}$ is combined in the general formula with one trivalent cation $B^{III}$ or two trivalent cations $B^{III}$ or three trivalent cations $B^{III}$. By way of example, two divalent cations $A^{II}$ are combined with two trivalent cations $B^{III}$.

In a further preferred embodiment, said layered double hydroxide comprises one divalent cation $A^{II}$ and two trivalent cations $B^{III}$ (B and B'). The resulting formula is:

$$A^{II}_{1-y} (B + B')^{III}_y (OH)_2 X \cdot nH_2O$$

In a second aspect, the present invention relates to a process for the synthesis of a layered double hydroxide according to first aspect of the invention comprising the one-pot reaction between an epoxide and a nucleophile in a solution comprising at least one divalent cation $A^{II}$ or alternatively $Li^I$, at least one trivalent cation $B^{III}$ selected from the group consisting of $V^{III}$, $Co^{III}$, $Cr^{III}$, $Mn^{III}$, $Fe^{III}$, $Ga^{III}$ and lanthanides, wherein said reaction is carried at an initial pH lower than 2.5, guaranteeing the solubility of all the cations at the beginning of the reaction. The present inventors have surprisingly found that pH values lower than 2.5 is a key point to avoid the formation of insoluble impurities, which affect the final product. At the same time, by working at for example room temperature and milder conditions, the proposed alkalinisation process guarantee obtaining pure LDHs, exclusively.

In a preferred embodiment according to the second aspect, the divalent cation $A^{II}$ in solution is selected from the group consisting of $Mg^{II}$, $Ca^{II}$, $Fe^{II}$, $Co^{II}$, $Ni^{II}$, $Cu^{II}$, $Zn^{II}$ and $Cd^{II}$.

In another preferred embodiment according to the second aspect, the layered double hydroxide further comprises a tetravalent metallic cation, preferably $Ti^{IV}$. See the resulting formula above.

In a further preferred embodiment according to the second aspect, said layered double hydroxide comprises one divalent cation $A^{II}$ and two trivalent cations $B^{III}$ (B and B'). See the resulting formula above.

The epoxide employed in said one-pot reaction is selected from the group consisting of glycidol, ethylene oxide, propylene oxide, and trimethylene oxide. Preferably, said epoxide is glycidol.

The nucleophile as employed in said one-pot reaction is selected from the group consisting of an oxoanion, halide, azide, isocyanate, thiocyanate, amide, alkyl sulfate, alkyl phosphonate, carboxylate and phenoxide. Preferably said nucleophile is a nucleophilic inorganic anion, more preferably is $Cl^-$, $Br^-$ or $I^-$. Most preferably, said nucleophilic inorganic anion is $Cl^-$. Usually, sodium and potassium salts of said anions are used.

The solution wherein the reaction takes place is a solution with water as the solvent, a solution with at least one organic solvent, or a solution with a mixture of water and at least one organic solvent.

Said organic solvent is selected from the group consisting of alcohols, acetone, acetonitrile, tetrahydrofuran (THF), ethylene glycol and glycerine.

When the solution is an aqueous solution, the reaction can be carried out at a temperature between 5 °C and 95 °C.

When the solution is a mixture of for example water and ethylene glycol or water and glycerine, the reaction is carried out at a temperature between -45 °C and 5 °C.

The reaction conditions are really flexible so that the reaction can take place for 15 s to 720 h and the employed concentrations of all reagents (cations, nucleophiles and epoxides) can range from a lower value of 0.1-10 mM up to a higher value of 5,000-7,500 mM.

In a third aspect, the present invention also relates to the use of the layered double hydroxide according to the first aspect of the invention, including all the possible embodiments alone or combined, for electrocatalysis. For example, LDHs are of interest in oxygen evolution reaction (OER) and hydrogen evolution reaction (HER) at both neutral and basic media.

The present invention also relates to the use of the layered double hydroxide according to the fist aspect of the invention, including all the possible embodiments alone or combined, for energy storage, for example, as supercapacitor or batteries. In this sense, LDHs can be of interest in the development of supercapacitive devices working under basic media as well as in lithium or sodium ion batteries.

The present invention also relates to the use of the layered double hydroxide according to the fist aspect of the invention, including all the possible embodiments alone or combined, as barrier additive for polymeric membranes in food packaging. Specifically, pristine and hybrid LDHs may act as protective barriers for both oxygen and water.

The present invention also relates to the use of the layered double hydroxide according to the fist aspect of the invention, including all the possible embodiments alone or combined, as an absorbent or anion exchanger. LDHs can be used as pollutant removal (e.g. $Cr^{VI}$ and $As^{V}$).

The present invention also relates to the use of the layered double hydroxide according to the fist aspect of the invention, including all the possible embodiments alone or combined, as a precursor compound for obtaining composites. Hybrid LDHs can be used as precursors for the thermal obtaining of nanocomposites consisting of a carbon matrix and either metal oxide and metallic nanoparticles.

It is noted that any of the embodiments disclosed herein for the product or the process can be taken alone or combined with any other embodiment disclosed herein unless the context specifies otherwise. In other words, for example, a preferred option of a defined feature can be combined with a more or less preferred option of another feature.

Described below are several examples by way of illustration of the invention and do not limit it in anyway.

## EXAMPLES

### *Materials and Methods*

**Chemicals.** Nickel chloride hexahydrate ($NiCl_2 \cdot 6H_2O$), iron chloride hexahydrate ($FeCl_3 \cdot 6H_2O$), vanadium chloride ($VCl_3$), sodium chloride (NaCl), sebacic acid ($(CH_2)_8(COOH)_2$), glycidol (Gly), potassium hydroxide (KOH), carbon black (CB), and polytetrafluoroethylene and (PTFE) were purchased from Sigma-Aldrich. Ethanol (EtOH) was purchased from Honeywell. All chemicals were used as received. Milli-Q water was obtained from a Millipore Milli-Q equipment.

**General synthesis according to the present invention.** Typically, precipitations were driven by aging for 24-48 h at room temperature. Concentration of cations, chloride and glycidol was evaluated from 0.5 to 3000 mM. The solids were obtained by filtration, washed three times with $H_2O$:EtOH and finally with EtOH. The samples were dried at room temperature and kept in desiccators for further characterization.

NiFe LDH. The typical synthesis of a NiFe LDH containing chloride requires aging 48h at room temperature in an aqueous solution containing: $[Ni^{II}]$ = 10 mM, $[Fe^{III}]$ = 5 mM, $[Cl^-]$ = 500 mM and [Gly] = 200 mM.

NiV LDH. The typical synthesis of a NiV LDH containing chloride requires aging 48h at room temperature in an aqueous solution containing: $[Ni^{II}]$ = 10 mM, $[V^{III}]$ = 5 mM, $[Cl^-]$ = 500 mM and [Gly] = 200 mM.

NiFeV LDH. The typical synthesis of a NiFeV LDH containing chloride requires aging 48h at room temperature in an aqueous solution containing: $[Ni^{II}]$ = 10 mM, $[Fe^{III}]$ = 2.5 mM, $[V^{III}]$ = 2.5 mM, $[Cl^-]$ = 500 mM and [Gly] = 200 mM.

NiFe-Seb LDH. The typical synthesis of a NiFe LDH containing sebacic acid (NiFe-Seb) requires aging 48h at room temperature in a water:ethanol = 1:1 solution containing: $[Ni^{II}]$ = 10 mM, $[Fe^{III}]$ = 5 mM, $[H_2Seb]$ = 10 mM, $[Cl^-]$ = 200 mM and [Gly] = 500 mM.

***Chemical, structural and physical characterization.***

Powder X-ray powder diffraction (PXRD) patterns were obtained employing a PANalytical Empyrean X-ray platform with a capillary platform and copper radiation (Cu Ka = 1.54178 Å) in the 2-theta range 2-70 °.

Attenuated total reflectance-Fourier transform infrared spectroscopy (ATR-FTIR) spectra were collected in a Bruker alpha II FTIR spectrometer in the 4000-400 $cm^{-1}$ range in absence of KBr pellets.

UV/Vis absorption spectra of the solid samples were recorded in a reflectance mode employing a Jasco V-670 spectrometer.

Field emission scanning electron microscopy (FESEM) and energy dispersive X-ray (EDS) spectroscopy studies were performed on a Hitachi S-4800 microscope at an accelerating voltage of 20 kV.

STEM-EELS observations were carried out in a JEOL ARM200cF equipped with a spherical aberration corrector, a cold field emission gun and a Gatan Quantum EEL spectrometer, operated at 80 and 200 kV. The intensity of the magnetic field within the objective lens pole piece gap is of the order of 1 T. EELS compositional maps were obtained by fitting EEL spectrum images to reference spectra *via* multiple linear least square (MLLS) fits.

Thermogravimetric analysis (TGA) of all samples was performed on a Mettler Toledo TGA/DSC2 apparatus in the 30-800 °C temperature range at 10 °C·$min^{-1}$ scan rate and an airflow of 100 mL·$min^{-1}$.

Carbon, nitrogen, hydrogen, and sulphur contents were determined by microanalytical procedures by using an LECO CHNS-932.

X-ray photoelectron spectroscopy (XPS) measurements were performed in an ultrahigh vacuum system ESCALAB210 (base pressure 1.0 x 10-10 mbar) from Thermo VG Scientific. Photoelectrons were excited by using the Al Ka line (1486.6 eV). All spectra were referred to the Fermi level.

X-ray absorption spectroscopy (XAS) measurements were performed using the X-ray absorption at the CLAESS beamline at the ALBA synchrotron facilities. Fe and Ni K-edges spectra at the near region (XANES) and the extended region (EXAFS), were measured at room temperature in transmission and/or fluorescence mode. Absorbents were prepared filtering a suspension of the samples in isopropyl alcohol through PVDF Millipore membranes (32 mm effective diameter), and sealed with Kapton® tape (50 $\mu$m in thickness) to prevent the oxidation of the sample. A Si(400) single crystal was used to obtain a monochromatic incident beam from a Mo anode target, using a current of 60 mA in the filament and a high voltage of 14 kV in the tube. Intensities of incident and transmitted X-rays were measured using an argon-filled proportional counter and a scintillation counter, respectively. EXAFS spectra were collected from 6980-7800 eV for Fe K-edge, and between 8230-8950 eV for Ni K- edge. The incident photon energy was calibrated using the first inflection point of the Fe K-edge (7112 eV) and the Ni K-edge (8333 eV) from reference foils of metallic Fe and Ni, respectively. Ten spectra of each sample were taken with exposure times ranging from 6 min to 2 h each one, to later be averaged. XANES data treatment was performed by subtracting the pre-edge background followed by normalization by extrapolation of a quadratic polynomial fitted at the post-edge region of the spectrum using ATHENA AUTOBK background removal algorithm. (B. Ravel, M. Newville, J. Synchrotron Radiat. 2005,12, 537e41, https://doi.org/10.1107/S0909049505012719) The quantitative analysis of the EXAFS results, were performed by modeling and fitting the insolated EXAFS oscillations. The EXAFS oscillations $\chi(k)$ were extracted from the experimental data with standard procedures using the Athena program. The $k^3$ weighted $\chi(k)$ data, to enhance the oscillations at higher k, were Fourier transformed. The Fourier transformation was calculated using the Hanning filtering function. EXAFS modeling was carried out using the ARTEMIS program which is part of the IFFEFIT package. (M. Newville, J. Synchrotron Radiat. 2001, 8, 322e4, https://doi.org/10.1107/S0909049500016964) Passive reduction factor $S_0^2$ values of 0.80 and 0.87 were obtained from fitting to Fe and Ni standard samples, respectively.

Magnetic Characterization. Magnetic data were collected over the bulk material with a Quantum Design superconducting quantum interference device (SQUID) MPMS-XL-5. The magnetic susceptibility of the samples was corrected considering the diamagnetic contributions of their atomic constituents as deduced from Pascal's constant tables and the sample holder. The dc data were recorded under an external applied field of 100 or 1000 Oe in the 2-300 K temperature range. The ac data were collected under an applied field of 3.95 Oe at 997, 333, 110, 10, and 1 Hz.

Mössbauer characterization. Spectra were collected in transmission mode using a conventional constant-acceleration spectrometer and a 25 mCi $^{57}CO$ source in a Rh matrix. The velocity scale was calibrated using $\alpha$-Fe foil. Powdered samples were packed into perspex holders in order to prepare the absorbers. Isomer shifts are given relative to metallic $\alpha$-Fe at room temperature. The spectra at 4 K were collected using a bath cryostat with the sample immersed in liquid He. The spectra were fitted to Lorentzian lines using a non-linear least-squares method. Distributions of quadrupole splittings were fitted according to the histogram method.

**Electrochemical characterization.**

Electrochemical experiments using Ni foam collectors. The electrochemical experiments were performed using a Gamry 1010E potentiostat/galvanostat connected to a personal computer that uses Gamry Instruments Framework 7.8.2 electrochemical software. The powdered materials were mixed with acetylene black (carbon black) and PTFE in a mass ratio of 80:10:10 in ethanol and deposited on a Ni foam electrode. The as-prepared Ni foam electrodes were dried overnight at 80 °C and pressed at 1000 kPa. Each working electrode contained about 0.25 mg·cm$^{-2}$ of electroactive material and had a geometric surface area of about 0.50 cm$^2$ (0.25 + 0.25 cm$^2$). In the case of electrodes where the LDH has been grown directly on the Ni foam surface they have the same geometric area. A typical three-electrode experimental cell equipped with a stainless-steel plate having 4 cm$^2$ of surface area as the counter electrode, and a Metrohm Ag/AgCl (3 M KCl) as the reference electrode was used for the electrochemical characterization of the working electrodes. All measurements were carried out after 10 min of nitrogen bubbling) using 1 M KOH aqueous solutions. The electrochemical properties were studied measuring the cyclic voltammetry (CV) and linear sweep voltammetry (LSV) using chronoamperometries (CA) during 30 min at different overpotentials. In addition, chronoamperometric studies were performed at a constant overpotential and chronopotentiometric (CP) studies at constant current densities. All potentials reported in this manuscript were converted to the overpotential (OP) scale, using: $E_{(OP)} = E_{(NHE)} - 0.401$ V = $E°_{(Ag/AgCl)} + 0.197$ V-0.401 V; and potential versus reversible hydrogen electrode (RHE), using: $E_{(RHE)} = E_{(NHE)} + 0.059·pH = E°_{(Ag/AgCl)} + 0.197$ V + 0.059·14 V.

The turnover frequency (TOF) values were calculated from the equation:

$$TOF = \frac{j \cdot A}{4 \cdot F \cdot m}$$

where $j$ is the current density at a given overpotential of 0.3 V, $A$ is the surface area of the working electrode, $F$ is the Faraday constant, and m is the number of moles of metal loaded on the electrode (*i.e.,* Ni and Fe).

Electrochemical surface area (ECSA) was acquired by measuring the current associated with double-layer capacitance from the scan-rate dependence of CVs. The potential range used for the CVs was 0.2-0.3 V vs Ag/AgCl (3 M KCl). The scan rates were 5, 10, 20, 50, and 100 mV s$^{-1}$. The double-layer capacitance was calculated by plotting the $j_a$ - $j_c$/2 (anodic versus cathodic currents) at 0.25 V vs Ag/AgCl (3 M KCl) against the scan rate.

Potentiostatic electrochemical impedance spectroscopy (PEIS) measurements were performed by applying an alternating-current (AC) amplitude of 10 mV in the frequency range from 0.01 to $1 \times 10^4$ Hz at an overpotential of 0.3 V. Measurements were recorded after an equilibration time of 10 min upon an overpotential of 0.3 V. PEIS data were analysed and fitted by means of Gamry Echem Analyst v. 7.07 software.

Electrochemical experiments using glassy carbon collectors.

The electrochemical experiments were performed using an Autolab potenciostat (Autolab 128N potentiostat/galvanostat) connected to a personal computer that uses NOVA 2.1 electrochemical software. A typical three-electrode cell equipped with a stainless-steel plate having 4 cm$^2$ as the counter electrode, a Metrohm Ag/AgCl (3 M KCl) as reference electrode and a glassy carbon electrode connected to a rotating disc electrode (Autolab RDE-2) at 1600 rpm as a working electrode. Electrodes were prepared with 5 mg of LDH powder and 2.5 mg of acetylene black (carbon black) and then dispersed in 1.25 mL of 1:1 (*v/v*) EtOH/H$_2$O with 25 $\mu$L of 5% Nafion solution and sonicated for 20 min. 3 $\mu$L of this dispersion was then drop-casted onto a previously polished (sequentially with 1.0, 0.3, and 0.05 $\mu$m alumina powder) 3 mm diameter RDE and dried at room temperature for 30 min.

All reported potentials and measurements have been calculated in the same way as previously described for Ni foam collectors.

### Alkalinisation precipitation study

#### NiFe LDH

Figure 2A depicts the pH profile for the precipitation of $NiCl_2$, $FeCl_3$, Ni $Cl_2$ + $FeCl_3$, and a control experiment containing NaCl and Gly, exclusively. When Gly is added to a solution containing NaCl at an initial pH around 2, chloride nucleophile drives the epoxide ring opening, resulting in a net hydroxyl release which increases the pH. This room temperature homogeneous alkanilization process can be modulated by changing both chloride and Gly concentration as it is represented in Equation 1:

$$v_{OH^-} = \frac{\partial [OH^-]}{\partial t} = k[Cl^-][Gly]$$

If a similar experiment is performed with aqueous solutions containing $NiCl_2$ and/or $FeCl_3$ the pH profiles depict clear differences which alert about the precipitation mechanism, intrinsic of each cation.

The precipitation of $NiCl_2$ is evidenced by the presence of an overshoot around pH = 8.0, followed by a *plateau* focused on pH = 7.9. As soon as all the Ni cations precipitates, the pH rises to values higher than 10, guaranteeing the completeness of the precipitation process. In the case of $FeCl_3$, as soon the reaction starts by the addition of Gly, the pH increases up to an overshoot around pH = 2.6 followed by a *plateau* centred around pH = 2.4, associated with the Fe cations precipitation. As in the case of $NiCl_2$, after the completeness of the precipitation, the pH increase reaching pH values higher than 10, guaranteeing the quantitative precipitation of the cations. The differences between both precipitation profiles can be understood in terms of the acidic and solubility constants of the involved cations, $Ni^{II}$ and $Fe^{III}$:

$$pK_a^{Ni^{II}} = 9.9, \quad pK_{sp}^{Ni(OH)_2} = 16.5; \text{ and } pK_a^{Fe^{III}} = 2.2, \quad pK_{sp}^{Fe(OH)_3} = 38.6.$$

Nonetheless, in the case of the solution containing both cations (*i.e.*: $NiCl_2$ + $FeCl_3$) the pH profile depicts two well defined stages. Specifically, while the first step follows the same pathway than bare $FeCl_3$, suggesting Ni cations do not affect the precipitation of Fe hydroxide; the second *plateau,* corresponding to the precipitation of Ni cations, takes place at lower pH (almost 1-unit pH below) than bare $NiCl_2$. This new scenario suggests that the precipitation of Ni occurs onto the already precipitated $Fe(OH)_3$ nanoparticles (NPs), confirming a greater stability of the on-growing LDHs phase, and providing the first insight into the obtaining a pure NiFe-LDH phase.

Interestingly, the precipitation of the LDHs phases occurs at lower pH that its constituent $M^{II}$, and moreover the thermodynamic stability can be estimated as a combination of both $M(OH)_2$ and $M^*(OH)_3$ phases. Generally:

$$pK_{sp}^{M_2\ M^*-Cl} = \frac{6}{7}\left(2 \cdot pK_{sp}^{M(OH)_2} + pK_{sp}^{M^*\ (OH)_3}\right) + 3$$

#### NiV LDHs.

Regarding the precipitation of Ni+V system, a similar set of experiments were carried out, depicted in Figure 2B. Regarding $VCl_3$ system, it is possible to observe that the precipitation take place in the pH interval from 3.7 to 5.1, in concordance with a $pK_{sp}$ value of 34. In the case of both cations (Ni+V), the pH profile begins by following the V pathway. However, an overshoot around pH = 7.5 followed by a *plateau* at pH = 7.3 confirms the precipitation of the NiV LDH system at ca. 0.5 unit lower than bare Ni". This behaviour, analogous to the previously observed for NiFe system, suggests both trivalent metals follow a 2-step precipitation scenario.

#### Ternary NiFeV LDHs.

Figure 2C depicts the pH profile of a 1:1 ratio mixture of $FeCl_3$:$VCl_3$. Unlike both bare Fe and V systems, the Fe+V precipitation depicts two overshoot-*plateau* sequences: the first one at 4.0 and 4.1, the second one at 6.0 and 5.9, respectively. These differences between the binary system composed by trivalent cations with the bare ones, alerts about a new precipitation pathway where which the presence of a trivalent cation affects the precipitation of the other one (Figure 2C).

Thus, in the case of the ternary system, when $NiCl_2$ is present, the precipitation profile follows the same pathway already observed for Fe+V system (Figure 2C). Moreover, at ca. pH=7.3 a new *plateau* can be noticeable suggesting that the precipitation of NiFeV LDH system occurs at lower pH than the bare Ni". These results demonstrate a completely different growth mechanism for ternary LDHs containing two trivalent cations, with at least 3 precipitation steps, but still methodologically within a one-pot procedure.

### *Structural characterization*

**NiFe LDHs.**

The structural characterization for NiFe LDH synthesized at room temperature compared to a conventional one prepared using a hydrothermal approach (NiFe-HT) is provided below:

Our NiFe samples synthesized at room temperature exhibit very low crystallinity (see Figure 3A) with the presence of two very broad signals related to (*103*) and (*110*) reflections, confirming the formation of a LDH phase, in agreement with pH profiles. Remarkably, the main interlayer reflexion, the (*003*) peak, remains practically absent which is characteristic of extremely thin crystals consisting of mono/few-layer structures. It is important to note that usually obtaining mono/few-layers of LDHs requires the use of organic solvents like formamide or acetone, and herein we exclusively use aqueous solutions. Table 1 compiles the structural parameters and the crystallite sizes obtained from Scherrer equation. In all the cases crystalline domains smaller than 5 nm are obtained.

**Table 1.** Crystallographic parameters and crystallite size for samples NiFe and NiFe-HT.

| Sample | $d_{as}$ (Å) | *a* parameter (Å) | Crystallite size (nm) | |
| --- | --- | --- | --- | --- |
| | | | *003* | *100* |
| NiFe | - | 3.07 | - | 4.1 |
| NiFe-HT | 7.87 | 3.09 | 11 | 22 |

In order to gain further information about the chemical speciation (oxidation state) and the quantitative incorporation of the cations, X-ray photoelectron spectroscopy (XPS) was performed (see Figure 3C-F). The presence of Ni in oxidation state 2+ is supported by its main peaks at 855.8 eV (Ni $2p_{3/2}$) and 873.3 eV (Ni $2p_{1/2}$), and their satellites at 861.5 eV and 879.4 eV, respectively. At the same time, Fe in oxidation state 3+ can be confirmed according to its two peaks at 711.8 eV and 723.6 eV, attributable with the Fe $2p_{3/2}$ and Fe $2p_{1/2}$ signals, respectively. These broad and not well-defined signals could be associated with Fe cations in highly defective environments, as expected for a nanometric samples with low crystallinity.

Additionally, the presence the Cl is confirmed by the main peak around 197.4 eV, with a shoulder at around 199.4 eV, ascribed to Cl $2p_{3/2}$ and Cl $2p_{1/2}$ respectively. Furthermore, XPS measurements confirm the quantitative incorporation of the cation (Ni:Fe ratio 2:1) and chloride (Cl:Fe ratio 1:1) into the solid phases, as confirmed by energy dispersive X-ray spectroscopy (EDS).

Figure 1A shows the typical morphology for NiFe LDHs obtained through the process of the invention, measured by atomic-resolution aberration-corrected scanning transmission electron microscopy (STEM) and electron energy-loss spectroscopy (EELS) at 80 kV. Simultaneously, acquired low magnification annular bright field (ABF) and high angle annular bright field (HAADF) images of the as-prepared NiFe-LDH sample (Figure 1A and 5A) micron-sized flakes of irregular shapes, resembles aggregates of disordered material. Additionally, the flakes are made of aggregates of nanocrystals. In stark contrast with a sample obtained hydrothermally (see Figure 1B), crystalline order is observed within nanocrystals of sizes smaller than 10 nm. Compositional maps obtained from EELS measurements reveal an important Ni/Fe segregation at the nanometric scale (<10x10 nm$^2$), denoting cationic clustering. It is worth mentioning that a sample obtained by a hydrothermal process presents a homogeneously distribution of the cations (Ni and Fe) even in surfaces bigger than 25x25 nm$^2$. Additionally, Figure 3G-H show both high-angle annular dark field (HAADF) and annular bright field (ABF) images at low magnification (scale bar: 200 nm) and, high magnification (scale bar: 5 nm), where nanocrystals lower than 10 nm are observed.

To provide further evidence of this pronounced cation clustering and their chemical identity across the layers, X-rays absorption spectroscopy (XAS) was performed. Hard X-ray absorption near-edge spectroscopy (XANES) measurements confirms the occurrence of Ni(II) and Fe(III) as expected and in excellent agreement with XPS results (see Figure 3I-J), confirming the expected oxidation states (Ni$^{2+}$, Fe$^{3+}$ and Cl$^-$) and the quantitative incorporation of the cations (Ni:Fe ratio of 2:1) and the anion (Cl:Fe ratio 1:1). Furthermore, to provide element-specific structural insights, the extended region from the absorption spectra (EXAFS) was analysed. Figure 3I-J depicts the Fourier transforms (FT) of the EXAFS oscillations, which can be interpreted as a pseudo-radial distribution of the interatomic distances of the absorbing atoms. In the case of Ni K-edge, curves exhibit two prominent peaks at ca. 1.6 and 2.7 Å (without phase correction), that correspond to the contributions from the first neighbours (O atoms), and the second ones (Ni or Fe atoms), respectively. The position of both contributions is practically the same for all samples, suggesting a minor effect over the Ni environments by the substitutional doping of Fe in the $Ni(OH)_2$ lattice. However, in the case of EXAFS measurements performed at the Fe K-edge, in addition to the two expected main contributions centred at 1.5 and 2.6 Å, a third signal can be clearly observed. This third peak at ca. 3.2 Å is characteristic of $Fe(OH)_3$, mainly associated with the seconds neighbouring Fe-O and Fe-OH-Fe pairs of this phase. In stark contrast, state-of-the-art NiFe-HT does not exhibit this third peak. Table 2 compiles the obtained structural parameters such as coordination numbers (N), interatomic distances (R) and structural disorder (Debye-Waller factor, DW). While almost not significant differences are observed in the case of Ni atoms, samples obtained through the procedure of the invention present shorter Fe-O and Fe-OH-Fe/Ni distances, with Fe centres more distorted in terms of DW factor, in comparison to hydrothermally ones. Hence, these results suggest that this high degree of Fe-clustering exclusively depends on the synthetic method being a key aspect of the procedure of the invention, proving a simply approach to obtain highly defective and clusterized Fe-based LDHs.

**Table 2.** Structural results from the EXAFS fitting (N: coordination number, R: interatomic distance and DW: Debye-Waller factor) at the Fe- and Ni K-edge for the first two coordination shells.

| Sample | K Edge | 1st environment M-O | | | 2nd environment M-(M, M') | | |
|---|---|---|---|---|---|---|---|
| | | N | R (Å) | DW (Å$^2$) | N | R (Å) | DW (Å$^2$) |
| NiFe | Fe-K Edge | 6.0 | 2.02 | 0.011 | 5.2 | 3.06 | 0.010 |
| | Ni-K Edge | 5.8 | 2.08 | 0.006 | 5.8 | 3.12 | 0.007 |
| NiFe (HT) | Fe-K Edge | 5.8 | 2.07 | 0.007 | 5.8 | 3.09 | 0.008 |
| | Ni-K Edge | 5.9 | 2.09 | 0.006 | 5.8 | 3.12 | 0.008 |

To provide more information on the chemical nature of these highly clusterized Fe-based LDHs, a thorough magnetic characterization has been performed. Typically, Fe-based LDHs synthesized hydrothermally can contain extrinsic magnetic impurities such as Fe spinels, which modify both magnetic and electrocatalytic behaviour, resulting in paramagnetic behaviour at high temperatures. In the samples obtained through the procedure of the invention, the lack of paramagnetic behaviour at high temperatures indicates the absence of spinel impurities (X·T versus T plots), allowing to confirm the hydroxylated nature of the Fe-clusters instead of $FeO_x$ (see Figure 4A). Additionally, a spontaneous magnetization temperature of around 12 K confirms the occurrence of NiFe LDH phase, as in the case of state-of-the-art NiFe LDHs obtained by hydrothermal processes.

Low-temperature dynamic AC magnetic susceptibility measurements are useful to investigate the possibility of having Fe-OH-Fe couples (see Figure 4D). Along this front, both in-phase and out-of-phase magnetic susceptibilities present a huge frequency dependence, which is partly related to the presence of antiferromagnetic (AF) Fe-OH-Fe pairs across the layers. Indeed, for the highest Fe concentrations accessible for LDH phases (Ni:Fe, 2:1, like in the present case), significant Fe clustering (AF Fe-OH-Fe pairs) occurs enabling the presence of spin frustration with a characteristic spin-glass like behavior, characterized by the Mydosh parameter (>0.03) as can be observed in Figure 4D. Moreover, compared to conventional synthesis, our NiFe samples lead to lower blocking and magnetization temperatures, as well as lower coercive fields and activation energies.

Last but not least, to univocally confirm the high degree of Fe-clustering in our samples in comparison with those hydrothermally obtained, Mössbauer spectroscopy was measured (Figure 4D-*inset*). The measurements confirm the presence of Fe(III) in all the samples in perfect agreement with the other techniques. Interestingly, the measurements recorded at 4 K alert about a higher presence of Fe-OH-Fe pairs in samples obtained through the procedure of the invention, indeed more than 35% compared to state-of-the-art NiFe LDH (G. Abellán et al. Inorg. Chem. 2013, 52, 10147-10157, https://doi.org/10.1021/ic401576q).

**NiV and NiFeV LDHs**

Figure 5A shows PXRD patterns obtained for the samples NiV and NiFeV containing chloride synthesized through the procedure of the invention. It is possible to observe that the occurrence of LDH phases can be successfully confirmed. Table 3 compiles the crystallographic parameter for the aforementioned samples. In all the cases, crystallite size smaller than 10 nm are obtained. In the case of sample NiFeV, EXAFS recorded at Ni-K edge (Figure 5B) and Fe-K edge (Figure 5C) confirms the presence of Ni and Fe in oxidation state 2+ and 3+, respectively. Additionally, Fe-K edge show the characteristic third peak denoting a pronounced clustering as previously observed for NiFe samples.

Moreover, Mössbauer spectroscopy also confirms this clustering (see Figure 5C).

XPS characterization (see Figure 5D-F) corroborates the presence of Ni and Fe in oxidation 2+ and 3+, respectively. In the case of vanadium, the signals at 516.7 eV 524.3 eV are proper to V in oxidation state 4+. In all the cases XPS measurements confirm the quantitative incorporation of the cation into the solid phases in the ratio Ni:Fe:V=4:1:1 and chloride as anion (Fe+V:Cl=1:1).

**Table 3.** Crystallographic parameters and crystallite size for samples NiV and NiFeV obtained through the procedure of the invention.

| Sample | $d_{BS}$ (Å) | *a* parameter (Å) | Crystallite size (nm) | |
|---|---|---|---|---|
| | | | *003* | *110* |
| NiV-Cl | 7.9 | 3.1 | 2.7 | 6.4 |
| NiFeV-Cl | 7.9 | 3.1 | 1.9 | 8.7 |

## *Electrochemical characterization*

The OER activity of the NiFe LDH obtained through the process of the invention was tested in a standard three-electrode cell configuration in 1M KOH electrolyte at room temperature using different working electrode collectors (Ni foam electrodes where the NiFe LDH was grown directly on the surface, Ni foam electrodes where the NiFe-LDH was deposited on the surface, and glassy carbon rotating disk electrodes). The sample was investigated by cycling voltammetry (CV) with and without 95% *iR* correction in order to compare the different values, showing an outstanding electrochemical performance. Figure 6A shows the CVs curve showing excellent overpotentials of 253±4 (1.480±4 V vs RHE) and 259±4 mV (1.486±4 V vs RHE) with and without *iR* correction, respectively, required for achieving a 10 mA·cm$^{-2}$ current density. It should be noted that these values were taken from the reduction curve of the CV, to avoid any possible contribution from the very intense nickel oxidation peak. For a closer comparison to industrial electrolysers, the overpotential required to obtain 100 mA·cm$^{-2}$ has been also extracted, being 501±22 (1.727±22 V vs RHE), 446±22 mV (1.672±22 V vs RHE) with *iR* correction. In addition, a series of successive chronoamperometries (CA) have been performed applying different overpotentials (in 10 mV steps and without iR corrections) during 30 min to stabilize the electrode, obtaining a value of 268 mV for 10 mA·cm$^{-2}$ (Figure 6B).

To properly analyse the electrocatalytic behaviour, the Tafel slopes and the turnover frequency (TOF) values have been extracted. The inset in Figure 6B depicts the Tafel slopes calculated from Figure 6A, showing excellent values of 46±3 and 50±3mV·dec$^{-1}$ with and without iR correction, respectively. The NiFe LDH catalytic behaviour has been also tested using a 3 mm diameter glassy carbon rotating disk electrode (RDE), showing an overpotential of 362±16 and 360±16 mV with *iR* correction (1.588 and 1,586 V vs RHE, respectively) required for achieving a 10 mA·cm$^{-2}$ current density (Figure 6C). The Tafel slopes calculated from RDE curves show extraordinary values of 37±2 mV·dec$^{-1}$ (36±2 mV·dec$^{-1}$ with *iR* correction). Regarding TOFs, the values have been calculated for all overpotentials using both the deposited Ni foam and the GC-RD electrodes, assuming that all the metal ions in the NiFe LDH were active. Figure 6D shows a TOF value of 0.011 s$^{-1}$ using Ni foam as collector, and 0.003 s$^{-1}$ with GC-RDE at an overpotential of $\eta$ = 300 mV. To further understand the observed electrochemical behaviour, the electrochemical surface area (ECSA) has been extracted from CVs performed in a non-faradaic region at different scan rates (Figure 6D-inset). An ECSA of 3 mF·cm$^{-2}$ has been obtained for the NiFe LDH, a value much higher than those typically observed for state-of-the-art bulk NiFe-LDHs (e.g. 0.6 mF·cm$^{-2}$ (NiFe-Cl) to 1.3 mF·cm$^{-2}$ (NiFe-octadecyl sulphate), Chemistry of Materials, 2019, vol. 31, p. 6798-6807). It is important to note that TOF and ECSA values were obtained using NiFe LDH obtained through the process of the invention deposited on Ni foam collectors as the working electrodes. The operating stability of OER electrocatalysts is a matter of utmost importance, in this line the stability and durability of the LDHs samples were tested at a constant current density *j* = 10 mA·cm$^{-2}$ as well as with a constant overpotential of $\eta$ = 300 mV for 6 hours, without showing an appreciable increase in the potentials or the currents (Figure 6E).

Table 4 compiles all the electrochemical values obtained for the NiFe LDH synthesized through the process of the invention.

**Table 4.** Comparison of the catalytic parameters of NiFe LDH prepared through the procedure of the invention.

| | OP at 10mA·cm$^2$ (mV) | | OP at 100mA·cm$^2$ (mV) | | Tafel (mV·dec$^{-1}$) | | TOF (s$^{-1}$) |
|---|---|---|---|---|---|---|---|
| | | (*iR* corr) | | (*iR* corr) | | (*iR* corr) | (at 300 mV) |
| On Ni foam | 259 ± 4 | 253 ± 4 | 501 ± 22 | 446 ± 22 | 50 ± 3 | 46 ± 3 | 0.011 |
| On glassy carbon | 362 ± 16 | 360 ± 16 | - | - | 37 ± 2 | 36 ± 2 | *0.003* |

### Scale-up synthesis of hybrid NiFe LDHs

In order to demonstrate that the procedure of the invention can be scaled up, two different approaches have been explored: i) the volumetric scaling, which is based on increasing the reaction volume; and ii) the mass scale up consisting on the increment of the initial concentrations. Typically, the space-time yield (STY) value, defined as kg of material per·m$^3$ of reaction mixture per day, is used to quantify the scale up production degree (Czaja, A. U.; Trukhan, N.; Müller, U. Industrial Applications of Metal-Organic Frameworks. Chem. Soc. Rev. 2009, 38 (5), 1284-1293. https://doi.org/10.1039/B804680H). In line with that, both purely inorganic NiFe LDH, and hybrid NiFe LDH containing sebacic acid have been carried out. It is worth to remark that scaling a hybrid LDHs represents a tremendous challenge itself.

As a first step, it is important to highlight how both parameters can modify the STY and at the same time to compare the differences with the main current syntheses. While the volumetric scale up does not affect the STY (not changes in the synthetic conditions are require, in terms of concentrations and temperature), it requires bigger reactors something that can result challenging in the case of the hydrothermal reactions, typically employed for the LDHs synthesis. However, the mass scale up increase dramatically the STY due to the double effect of increasing the concentration (bigger the mass in smaller volume), but requiring the optimization of the synthetic conditions (*e.g.*: solubility of the reagents, temperature, kinetics). Typically, homogeneous syntheses are driven employing a total cationic concentration lower than 25 mM; and those which increase the concentration up to 100 mM are driven by coprecipitation.

In the case of the procedure of the invention either the volumetric and mass scaling up are straightforward. Table 5 compiles the evaluated conditions even 50 times higher than the original one.

**Table 5.** Initial cation concentration employed in the scale up experiments. Theoretical NiFe-Cl mass obtained and volume required to obtain 1 Kg of NiFe-Cl as a function of the initial concentration.

| x | [Ni + Fe] | [Cl⁻] (mM) | [Gly] | g LDH/L | L/Kg LDH |
|---|---|---|---|---|---|
| 1x | 15 | 50 | 90 | 1.5 | 647 |
| 5x | 75 | 250 | 450 | 7.7 | 129 |
| 10x | 150 | 500 | 900 | 15 | 65 |
| 25x | 375 | 1250 | 2250 | 39 | 26 |
| 50x | 750 | 2500 | 4500 | 77 | 13 |

By *in situ* pH experiments it can be demonstrated that the scale up process does not affect the 2-step growth mechanism in the case of NiFe LDHs (see Figure 7). At pH lower than 3 the precipitation of Fe takes place, then the precipitation of NiFe LDHs take place at pH lower than 7.5 confirming the obtaining of the LDH phases. The higher the concentration, the faster the reaction. According with the pH profiles we can conclude that 11.7, 6.1 and 1h are required for the synthesis of NiFe-Cl x1, x25 and x50, respectively. In addition, the pH curves are useful to calculate the space-time yield parameter, a value employed to quantify the scale up production degree. In the experiment NiFe-Cl x50 an unpreceded value of 1885 kg/day·m$^3$, more than 200 times higher than the typical reports (Table 6), is obtained.

STEM-EELS characterization recorded over the sample NiFe-Cl x50 confirms a highly degree of clustering as it was observed for samples obtained at lower scales. This result demonstrate that the occurrence of clustering is inherent to the synthetic process of the invention, being not affected during the scaling up process (see Figure 8).

**Table 6.** Reaction time, grams of LDH per L of reaction, and space-time yield (STY) for samples NiFe-Cl x1, x25 and x50 in comparison with one of the best reports of NiFe LDHs.

| Sample | Reaction time (h) | g LDH/L | STY (kg/day·m$^3$) |
|---|---|---|---|
| **NiFe-Cl 1x** (present invention) | 11.7 | 1.5 | 3.2 |
| **NiFe-Cl 25x** (present invention) | 6.1 | 38 | 152 |
| **NiFe-Cl 50x** (present invention) | 1 | 77 | 1885 |
| **NiFe-Cl** (Chem. Mater. 2018, 30, 13, 4321-4330) | 6 | 2.1 | 8.2 |
| **NiFe-COs** (Adv. Energy Mater. 2018, 8, 1703341) | 12 | 2.9 | 6.2 |

Additionally, as a matter of fact we optimized the synthetic conditions for the synthesis of a hybrid NiFe LDHs having organic molecules (sebacic acid, Seb) in the interlayer space. The solid reagents (NiCl$_2$.6H$_2$O, FeCl$_3$.6H$_2$O and

H$_2$Seb) were mixed in an ethanol:water mixture. To optimize the synthesis of these hybrid phases and facilitate the dissolution of concentrated sebacate molecules water/ethanol solvent mixtures were employed, taking place the complete dissolution as soon the reaction starts the alkalinisation process. We have evaluated five scenarios by increasing the total cation concentrations up to 50 times (from 15 to 750 mM). It is important to highlight that this highly concentrated conditions were never evaluated before, since typically homogeneous methods work at concentrations lower than 50 mM. The formation of the LDH phase has been confirmed by PXRD, ATR-FTIR, and XPS spectroscopy. To sum up, our experiments allow to conclude the successful synthesis of hybrid NiFe-Seb LDHs even at total cationic concentration of 750 mM. Figure 9 shows pictures of the scaling up from 1x to 50x in the case of NiFe-Seb samples through the process of the invention. Due to the hydrolytic chemistry of trivalent transition cations (acid and solubility constants) the synthesis of hybrid (either binary, ternary or more) can be easily extrapolated to other formulations, as it was demonstrated in the case of NiFeV LDH sample.

**Claims**

1. A layered double hydroxide comprising at least one divalent cation A$^{II}$ or alternatively Li$^{I}$, at least one trivalent cation B$^{III}$ selected from the group consisting of V$^{III}$, Co$^{III}$, Cr$^{III}$, Mn$^{III}$, Fe$^{III}$, Ga$^{III}$ and lanthanides, wherein said layered double hydroxide has the formula:

$$A^{II}_{1-y}B^{III}_y(OH)_2 X \cdot nH_2O$$

or in case of using Li$^{I}$ instead of the at least one divalent cation A$^{II}$, the formula is:

$$LiM^{III}_2(OH)_6 X \cdot nH_2O$$

wherein X is an anion, y is higher than 0 but lower than 1, and n is the number of water molecules
and wherein said layered double hydroxide has a non-homogeneous distribution of the cations across thereof as shown by scanning transmission electron microscopy (STEM) combined with electron energy-loss spectroscopy (EELS) and by the presence of a single peak in the range from 3 to 4 Å measured through hard X-ray absorption near-edge spectroscopy (XANES).

2. The layered double hydroxide according to claim 1, wherein the divalent cation A$^{II}$ is selected from the group consisting of Mg$^{II}$, Ca$^{II}$, Fe$^{II}$, Co$^{II}$, Ni$^{II}$, Cu$^{II}$, Zn$^{II}$ and Cd$^{II}$.

3. The layered double hydroxide according to claim 1 or 2, wherein said layered double hydroxide further comprises a tetravalent metallic cation, preferably Ti$^{IV}$.

4. The layered double hydroxide according to any of the preceding claims, wherein said layered double hydroxide comprises one divalent cation A$^{II}$ and two trivalent cation B$^{III}$.

5. A process for the synthesis of a layered double hydroxide according to claim 1 comprising the one-pot reaction between an epoxide and a nucleophile in a solution comprising at least one divalent cation A$^{II}$ or alternatively Li$^{I}$, at least one trivalent cation B$^{III}$ selected from the group consisting of V$^{III}$, Co$^{III}$, Cr$^{III}$, Mn$^{III}$, Fe$^{III}$, Ga$^{III}$ and lanthanides, wherein said reaction is carried at a pH lower than 2.5.

6. The process according to claim 5, wherein the divalent cation A$^{II}$ in solution is selected from the group consisting of Mg$^{II}$, Ca$^{II}$, Fe$^{II}$, Co$^{II}$, Ni$^{II}$, Cu$^{II}$, Zn$^{II}$ and Cd$^{II}$.

7. The process according to claim 5 or 6, wherein the solution further comprises a tetravalent metallic cation, preferably Ti$^{IV}$.

8. The process according to any of claims 5 to 7, wherein the epoxide is selected from the group consisting of glycidol, ethylene oxide, propylene oxide, and trimethylene oxide, preferably glycidol.

9. The process according to any of claims 5 to 8, wherein the nucleophile is selected from the group consisting of an oxoanion, halide, azide, isocyanate, thiocyanate, amide, alkyl sulfate, alkyl phosphonate, carboxylate and phenoxide, preferably Cl⁻, Br or I⁻.

10. The process according to any of claims 5 to 9, wherein the solution is a solution with water as the solvent, a solution with at least one organic solvent, or a solution with a mixture of water and at least one organic solvent.

11. Use of a layered double hydroxide, according to any one of claims 1 to 4, for electrocatalysis.

12. Use of a layered double hydroxide, according to any one of claims 1 to 4 for energy storage (supercapacitor or batteries).

13. Use of a layered double hydroxide, according to any one of claims 1 to 4 as barrier additive for polymeric membranes in food packaging.

14. Use of a layered double hydroxide, according to any one of claims 1 to 4 as an absorbent or anion exchanger.

15. Use of a layered double hydroxide, according to any one of claims 1 to 4, as a precursor compound for obtaining composites.

**Figure 1**

# Figure 2

## Figure 3

# Figure 3 (cont.)

**Figure 4**

## Figure 5

Figure 6

Figure 7

Figure 8

O *K-edge*

Ni $L_{2,3}$-*edge*

Fe $L_{2,3}$-*edge*

Figure 9

EP 4 043 404 A1

Europäisches Patentamt
European Patent Office
Office européen des brevets

# EUROPEAN SEARCH REPORT

Application Number

EP 21 38 2113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAI ZHAO ET AL: "Introducing Fe 2+ into Nickel-Iron Layered Double Hydroxide: Local Structure Modulated Water Oxidation Activity", ANGEWANDTE CHEMIE, vol. 130, no. 30, 20 July 2018 (2018-07-20), pages 9536-9540, XP055827234, DE ISSN: 0044-8249, DOI: 10.1002/ange.201804881 | 1,2 | INV. C01G53/00 |
| Y | * figure 2 * <br> * page 9538, column 2 * | 1-15 | |
| X | SAKITA A.M.P. ET AL: "Novel NiFe/NiFe-LDH composites as competitive catalysts for clean energy purposes", APPLIED SURFACE SCIENCE, vol. 447, 1 July 2018 (2018-07-01), pages 107-116, XP055827235, AMSTERDAM, NL ISSN: 0169-4332, DOI: 10.1016/j.apsusc.2018.03.235 | 1,2 | |
| Y | * the whole document * | 1-15 | |
| X | WU XU ET AL: "Fabrication of NiFe layered double hydroxides using urea hydrolysis-Control of interlayer anion and investigation on their catalytic performance", CATALYSIS COMMUNICATIONS, vol. 50, 1 May 2014 (2014-05-01), pages 44-48, XP055827237, AMSTERDAM, NL ISSN: 1566-7367, DOI: 10.1016/j.catcom.2014.02.024 | 1,2 | |
| Y | * page 45, paragraph 2 - page 47, paragraph 3.2 * | 1-15 | |

**TECHNICAL FIELDS SEARCHED (IPC)**

C01G

The present search report has been drawn up for all claims

| Place of search | Date of completion of the search | Examiner |
|---|---|---|
| Munich | 29 July 2021 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **OESTREICHER, V. ; JOBBÁGY, M.** One Pot Synthesis of Mg2Al(OH)6Cl·1.5H2O Layered Double Hydroxides: The Epoxide Route. *Langmuir,* 2013, vol. 29 (39), 12104-12109, https://doi.org/10.1021/la402260m
- **OESTREICHER, V. ; JOBBÁGY, M.** On Demand One-Pot Mild Preparation of Layered Double Hydroxides and Their Hybrid Forms: Advances through the Epoxide Route. *Chem. - Eur. J.,* 2019, vol. 25 (54), 12611-12619, https://doi.org/10.1002/chem.201902627
- **G ABELLÁN ; E CORONADO ; C MARTÍ-GASTALDO ; A RIBERA ; JF SANCHEZ-ROYO.** *Chemical Science,* 2012, vol. 3 (5), 1481-1485, https://doi.org/10.1039/C2SC01064J
- **G. ABELLÁN et al.** *Inorg. Chem.,* 2013, vol. 52, 10147-10157, https://doi.org/10.1021/ic401576q
- **J ROMERO ; M VARELA ; M ASSEBBAN ; V OESTREICHER ; A GUEDEJA-MARRÓN ; J L JORDÁ ; G ABELLÁN ; E CORONADO.** *Chemical Science,* 2020, vol. 11 (29), 7626-7633, https://doi.org/10.1039/D0SC00697A
- **B. RAVEL ; M. NEWVILLE.** *J. Synchrotron Radiat,* 2005, vol. 12, 537e41, https://doi.org/10.1107/S0909049505012719
- **M. NEWVILLE.** *J. Synchrotron Radiat,* 2001, vol. 8, 322e4, https://doi.org/10.1107/S0909049500016964
- **G. ABELLÁN et al.** *Inorg. Chem,* 2013, vol. 52, 10147-10157, https://doi.org/10.1021/ic401576q
- *Chemistry of Materials,* 2019, vol. 31, 6798-6807
- **CZAJA, A. U ; TRUKHAN, N. ; MÜLLER, U.** Industrial Applications of Metal-Organic Frameworks. *Chem. Soc. Rev.,* 2009, vol. 38 (5), 1284-1293, https://doi.org/10.1039/B804680H
- *Chem. Mater.,* 2018, vol. 30 (13), 4321-4330
- *Adv. Energy Mater.,* 2018, vol. 8, 1703341